# FASCICULE DE BREVET EUROPEEN

(11) **EP 3 877 744 B1**
(45) Date de publication et mention de la délivrance du brevet: **10.01.2024**
(21) Numéro de dépôt: 19818228.9
(22) Date de dépôt: 07.11.2019
(51) Int. Cl.: G01F 11/28, B01F 31/65, B01F 33/30, B01F 35/88, G01N 1/38, B01L 3/00, G01N 35/10

(54) **DISPOSITIF MICROFLUIDIQUE DE PREPARATION D'ECHANTILLONS OFFRANT UNE GRANDE REPETABILITE**
MIKROFLUIDISCHE PROBENVORBEREITUNGSVORRICHTUNG MIT HOHER WIEDERHOLBARKEIT
MICROFLUIDIC SAMPLE PREPARATION DEVICE OFFERING HIGH REPEATABILITY

(30) Priorité: 09.11.2018 FR 1860403
(43) Date de publication de la demande: 15.09.2021
(73) Titulaire: Commissariat à l'énergie atomique et aux énergies alternatives, 75015 Paris (FR); Horiba ABX SAS, 34184 Montpellier Cedex 4 (FR)
(72) Inventeur: FOUILLET, Yves, 38054 GRENOBLE CEDEX 09 (FR); ALI-CHERIF, Anais, 63000 Clermont Ferrand (FR)
(74) Mandataire: Brevalex
(86) Numéro de dépôt international: PCT/FR2019/052660
(87) Numéro de publication internationale: WO 2020/095000

(56) Documents cités:
- WO-A1-2007/134191
- WO-A1-2009/029445
- WO-A1-2017/041023
- FR-A1- 3 058 995
- US-A1- 2015 147 777

## Description

### DOMAINE TECHNIQUE ET ÉTAT DE LA TECHNIQUE ANTÉRIEURE

La présente invention se rapporte à un dispositif microfluidique de préparation d'une solution, par exemple une solution biologique en vue de son analyse, présentant une grande répétabilité et une grande précision dans les volumes de liquides manipulés.

Dans le domaine de la santé, en particulier dans le domaine de l'analyse médicale, on réalise des dilutions et/ou traitement des éléments figurés du sang (globules blancs, globules rouges et plaquettes) en vue d'effectuer une analyse hématologique. Un traitement peut consister en une lyse des globules rouges ou un marquage spécifique.

Ces manipulations d'échantillons de sang requièrent une grande précision au niveau des volumes manipulés, par exemple pour connaître précisément la concentration après dilution, et une grande répétabilité.

En outre on cherche à réduire le coût de revient des dispositifs microfluidique.

Il existe des dispositifs de préparation de sang en vue de leur analyse qui offrent une grande précision et une grande répétabilité, comme les automates d'hématologie actuels. Il s'agit de dispositifs de grande taille. En outre, ils sont utilisés par des professionnels et ils nécessitent une maintenance régulière qui implique l'intervention d'un technicien, ce qui représente un coût supplémentaire. Cet entretien implique en outre des périodes d'inactivité. Par ailleurs, les quantités de liquides (sang et réactif) utilisées peuvent être importantes.

Le document EP1111281 décrit un dispositif d'analyse biologique comportant une carte dans laquelle un réseau fluidique est structuré. Des vannes sont également réalisées. Le circuit est connecté à une source de gaz propulseur qui assure le déplacement des liquides et leur mélange. Le circuit comportant au moins deux canaux, chacun servant à mesurer le volume d'un liquide, les deux canaux sont connectés à un serpentin commun dans lequel les deux liquides sont injectés en vue de leur mélange. D'une part, le déplacement des liquides par de l'air requiert une gestion de l'interface air-liquide biologique qui peut être délicate. D'autre part, deux volumes de liquide sont remplis puis déplacés, la précision de la dilution va dépendre du déplacement des deux liquides pour les mélanger dans le serpentin, or lors du déplacement peut se poser des problèmes de mouillage et démouillage susceptibles d'engendrer une perte d'une partie de l'un ou l'autre des deux liquides.

De plus, une purge en air est requise pour éviter toute présence d'un autre liquide dans le circuit, des bulles d'air peuvent apparaître dans le mélange et fausser les mesures.

Le document US 2015/0147777 A1 divulgue un dispositif fluidique qui comprend un boîtier, une chambre d'entrée d'échantillon, une première chambre de trop-plein en communication avec ladite chambre d'entrée d'échantillon, un conduit de dosage, une butée capillaire en communication avec l'extrémité dudit conduit de dosage, une deuxième chambre de trop-plein en communication avec ledit conduit de dosage, une chambre de mélange en communication avec ledit arrêt capillaire et au moins une chambre d'entrée de fluide supplémentaire en communication avec ledit conduit de dosage.

### EXPOSÉ DE L'INVENTION

La présente invention concerne un dispositif selon la revendication 1 pour la préparation d'au moins une solution de volume calibré et un procédé selon la revendication 12 pour la préparation d'une solution mettant en oeuvre un tel dispositif. Des caractéristiques préférées de l'invention sont exposées dans les revendications dépendantes.

C'est par conséquent un but de la présente invention d'offrir un dispositif microfluidique de préparation d'une solution offrant une précision et une répétabilité au moins de l'ordre de celles des dispositifs de l'état de la technique dans un encombrement réduit.

Une solution peut être une solution liquide ou gazeuse.

Les solutions sont préparées à partir d'au moins un échantillon fluidique comportant des particules dispersées dans un milieu ou une espèce soluble dans un milieu, et d'un réactif fluidique destiné, par exemple, soit à la dilution, soit à agir sur les particules de l'échantillon par exemple pour réaliser une lyse dans le cas d'un échantillon de sang, ou à marquer lesdites particules.

Les particules peuvent être des cellules, des fragments cellulaires, ou des microorganismes, des microalgues ou leurs fragments. Le terme « particules » peut également désigner des microbilles, par exemple des microbilles métalliques, des microbilles de verre ou des microbilles organiques, couramment mises en oeuvre dans des protocoles biologiques. Il peut également s'agir de gouttelettes insolubles baignant dans un milieu liquide, par exemple des gouttelettes lipidiques dans une émulsion de type huile dans eau. Ainsi, le terme « particule » désigne à la fois des particules endogènes, initialement présentes dans l'échantillon examiné, et des particules exogènes, ajoutées à cet échantillon avant l'analyse. Une espèce soluble peut être un ion, une molécule (protéine, métabolite, vitamine, hormone, co-facteur, drogue, etc.) ou un assemblage macromoléculaire.

Un échantillon liquide peut être un liquide corporel, par exemple, et de façon non limitative, du sang, plasma ou sérum sanguin, de l'urine, de la lymphe ou du liquide céphalo-rachidien. Par exemple, dans le cas d'un échantillon de sang, les particules sont les éléments figurés du sang.

Par exemple, le réactif peut être :
- Dans le cas d'une dilution, une solution saline tamponnée ex : PBS ou des réactifs de dilution commerciaux ex : ABX Diluant ;
- Dans le cas d'une lyse, une solution connue NH₄Cl ou des réactifs commerciaux commercialisés sous le nom Whitediff^{®}, etc ;
- Dans le cas d'un marquage : pour un marquage d'acide nucléique le réactif peut être le thiazole orange par exemple (réactif commercialisé sous le nom ABX Retix^{®}), le marquage peut consister en une coloration et en un immunomarquage.

Le but énoncé ci-dessus est atteint par un dispositif microfluidique de préparation d'une solution en vue de son analyse, comportant un réseau microfluidique comprenant au moins une entrée de connexion par exemple à un réservoir contenant l'échantillon, au moins une entrée de connexion par exemple à un réservoir contenant le réactif, au moins une sortie d'évacuation, au moins une sortie de collecte de la solution à analyser et une zone d'échantillonnage de volume donné. Le dispositif comporte également au moins deux chambres de préparation connectées à la zone d'échantillonnage et disposées de part et d'autre de la zone d'échantillonnage, de sorte que le fluide circulant d'une chambre de préparation à l'autre circule dans la zone d'échantillonnage. Le dispositif comporte également des moyens aptes à contrôler la circulation des fluides dans les différentes parties du circuit, par exemple au moins l'une des chambres de préparation étant une chambre à volume variable entre un premier volume nul et un deuxième volume donné. Le dispositif est destiné à coopérer avec un système de commande des moyens de contrôle de la circulation des fluides et du volume en commandant le volume de la chambre à volume variable.

Grâce à l'invention, le volume de la portion d'échantillon est défini par la zone d'échantillonnage, puis est injecté dans la chambre de préparation à volume variable, et le volume du réactif est défini en complétant la chambre de préparation jusqu'à ce que son volume atteigne le deuxième volume donné. Ainsi le ratio de dilution est fixé par les volumes de la zone d'échantillonnage et de la chambre de préparation.

En outre, puisque le volume de la chambre de préparation augmente simultanément à l'injection des fluides, le risque d'apparition de bulles d'air dans le mélange est réduit. Avantageusement, le premier volume de la chambre de préparation est nul. Une purge n'est donc pas requise.

En outre du fait des deux chambres de préparation, le mélange peut être transféré d'une chambre à l'autre à travers la zone d'échantillonnage ce qui, d'une part, améliore le mélange des deux fluides, et d'autre part, permet de collecter une quantité du premier fluide pouvant être restée dans la zone d'échantillonnage.

Cette conception permet en outre de manière très avantageuse de pré-remplir l'une des chambres de préparation avant l'injection de l'échantillon, ce qui améliore notamment le mélange dans le cas du sang.

De manière très avantageuse, l'entrée d'alimentation en réactif est située en amont de la zone d'échantillonnage en direction de l'une des chambres de préparation. Ainsi lors de l'injection du réactif dans la chambre de préparation, celui-ci circule dans la zone d'échantillonnage et collecte au moins en partie d'éventuelles traces de l'échantillon ayant pu rester dans la zone d'échantillonnage.

En d'autres termes, on prélève une aliquote en remplissant au moins un canal de volume calibré qui est transférée dans une chambre, dont le volume restant est complété par le réactif jusqu'à un volume calibré. Le volume total de la solution souhaitée est le volume calibré de la chambre. La réalisation de la solution est simplifiée et limite les risques de perte de fluide lors des transferts.

La présente invention a alors pour objet un dispositif de préparation d'au moins une solution à partir d'au moins un premier échantillon et d'au moins un premier réactif, comportant un réseau microfluidique comprenant au moins une première entrée d'alimentation en un premier échantillon, au moins une deuxième entrée d'alimentation en un premier réactif, au moins une sortie d'évacuation, au moins une sortie de collecte de la solution à analyser, une première zone d'échantillonnage à laquelle sont connectées les première et deuxième entrées, au moins des première et deuxième chambres de préparation connectées à la première zone d'échantillonnage, et disposées de part et d'autre de la zone d'échantillonnage de sorte que le fluide destiné à circuler d'une chambre de préparation à l'autre circule dans la première zone d'échantillonnage, au moins la première chambre de préparation étant à volume variable entre un volume minimal V0 et au moins un volume calibré Vc, ledit dispositif comportant également des moyens pour permettre ou interrompre la circulation du fluide au moins au niveau des première et deuxième entrées et au niveau des sorties de collecte et d'évacuation.

Avantageusement, la deuxième chambre de préparation est également à volume variable entre le volume minimal V0 et au moins un volume calibré Vc.

Dans un exemple de réalisation particulièrement avantageux, la première et/ou la deuxième chambre de préparation comportent une paroi en matériau hyperélastique destinée à se déformer jusqu'à ce que le volume de ladite chambre soit au moins égal à Vc.

De préférence, la deuxième entrée d'alimentation en premier réactif est connectée à la zone d'échantillonnage, de sorte que lors de l'injection du premier réactif dans la première chambre de préparation, le premier réactif traverse la zone d'échantillonnage.

Selon une caractéristique additionnelle, le dispositif comporte des moyens pour permettre ou interrompre la circulation du fluide situés à l'entrée de la première chambre de préparation.

Selon une caractéristique additionnelle, le dispositif comporte au moins une entrée d'alimentation supplémentaire en un deuxième réactif, une deuxième zone d'échantillonnage et des troisième et quatrième chambres de préparation connectées à la zone d'échantillonnage et disposées de part et d'autre de la deuxième zone d'échantillonnage de sorte que le fluide destiné à circuler d'une chambre de préparation à l'autre circule dans la deuxième zone d'échantillonnage, au moins la troisième chambre de préparation étant à volume variable entre un volume minimal V0' et au moins un volume calibré Vc', la deuxième zone d'échantillonnage étant connectée à la première entrée d'alimentation pour un premier échantillon de sorte que, lors du remplissage de la première zone d'échantillonnage, le deuxième zone d'échantillonnage soit remplie, et des moyens pour permettre ou interrompre la circulation du fluide situés à l'entrée de la troisième chambre de préparation.

Le dispositif de préparation peut comporter au moins une entrée d'alimentation pour un fluide de rinçage du circuit et/ou des moyens pour générer des bulles de gaz de volume calibré en amont de la sortie de collecte.

La présente invention a également pour objet un ensemble comportant au moins un dispositif de préparation selon l'invention et un support comprenant au moins le réservoir d'échantillon, au moins le réservoir de réactif, des moyens de commande configurés pour activer des moyens d'actionnement des moyens pour permettre ou interrompre la circulation des fluides, des moyens pour modifier le volume de la au moins première chambre de préparation, et des moyens d'analyse connectés à la sortie de collecte.

De préférence, les moyens de commande sont configurés pour transférer la solution entre la première chambre de préparation et la deuxième chambre de préparation à travers la zone d'échantillonnage.

Dans un exemple avantageux, les moyens de commande sont configurés pour injecter dans la première chambre de préparation une première quantité de réactif, préalablement à l'injection d'un volume d'échantillon mesuré par la zone d'échantillonnage.

Les moyens d'analyse peuvent permettre de quantifier et/ou de qualifier des éléments contenus dans la solution.

La présente invention a également pour objet un procédé de préparation d'une solution mettant en oeuvre un dispositif de préparation selon l'invention comportant :
a) une phase d'échantillonnage lors de laquelle la zone d'échantillonnage est remplie de l'échantillon,
b) une phase d'injection du volume d'échantillon Ve contenu dans la zone d'échantillonnage dans la première chambre de préparation,
c) une phase d'injection d'un volume de réactif dans la chambre de préparation jusqu'à ce que le volume de la première chambre de préparation atteigne le volume calibré Vc,
d) une phase de transfert de la solution entre la première chambre et la deuxième chambre de préparation de sorte à la mélanger et à collecter les traces d'échantillon dans la zone d'échantillonnage.

La phase d'injection c) a avantageusement lieu à travers la première zone d'échantillonnage.

De préférence, le procédé de préparation comporte une étape d'injection d'une quantité de réactif dans la première chambre avant l'injection du volume calibré d'échantillon.

La présente invention a également pour objet un procédé d'analyse d'une solution mettant en oeuvre l'ensemble selon l'invention, comportant la préparation de la solution et le transfert de la solution de l'une des chambres de préparation vers les moyens d'analyse à travers la sortie de collecte.

### BRÈVE DESCRIPTION DES DESSINS

La présente invention sera mieux comprise sur la base de la description qui va suivre et des dessins en annexe sur lesquels:
- la figure 1 est une représentation schématique d'un exemple de dispositif de préparation d'une solution,
- les figures 2A et 2B sont des représentations schématiques d'un exemple d'une chambre de préparation déformable pouvant être mise en oeuvre dans le dispositif de la figure 1, dans deux états, l'une à volume nul, et l'autre à volume maximal.
- les figures 3A et 3B sont des représentations schématiques d'un exemple de vanne pouvant être mise en oeuvre dans le dispositif de la figure 1,
- la figure 4A est une représentation schématique d'un exemple de circuit fluidique complet formé par le circuit du dispositif de préparation de la figure 1 et par le support de carte,
- les figures 4B et 4C est une représentation schématique d'une chambre de préparation d'un dispositif de préparation sur un support de carte, d'un circuit pneumatique de commande de la chambre et d'une unité de commande dans deux états différents,
- les figures 5A à 5D sont des représentations schématiques du circuit de la figure 4 lors de différentes étapes de fonctionnement,

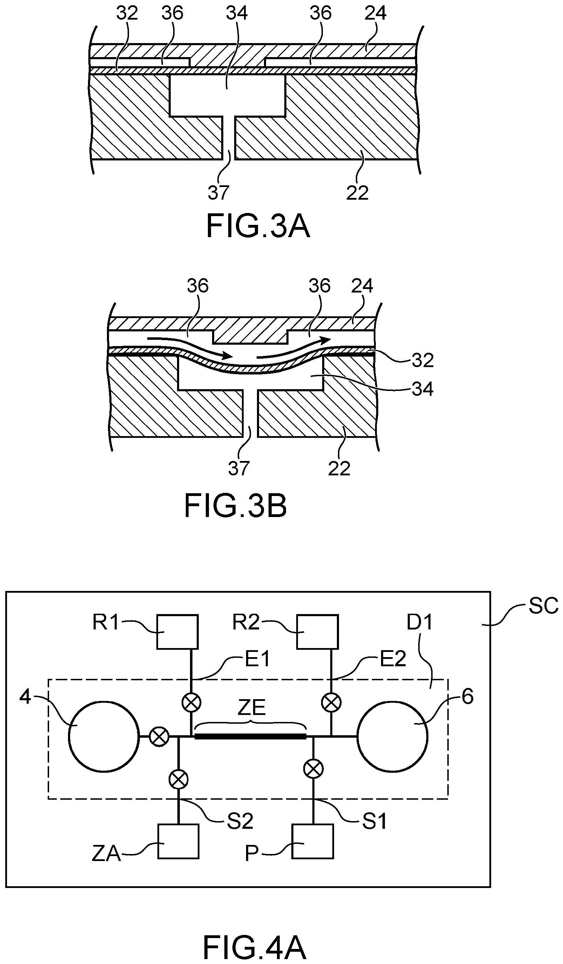

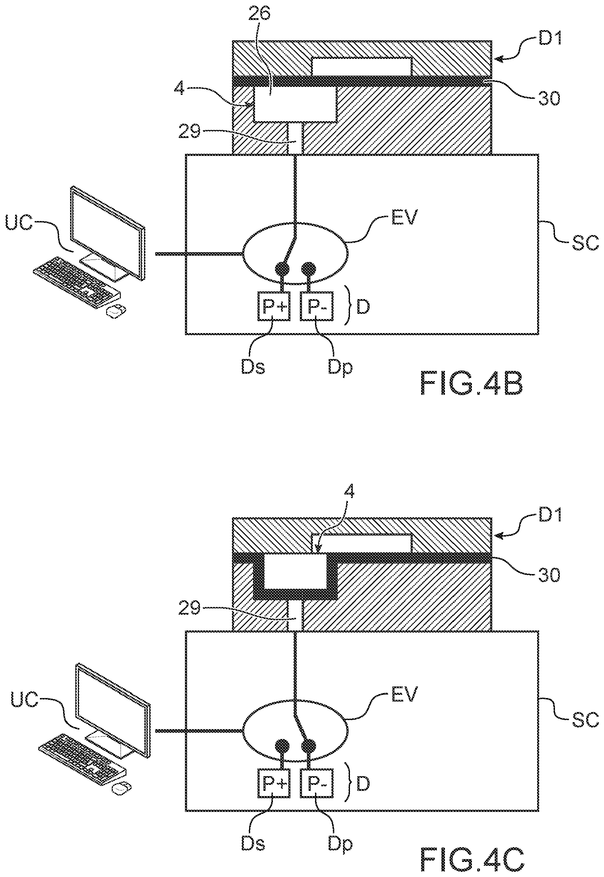

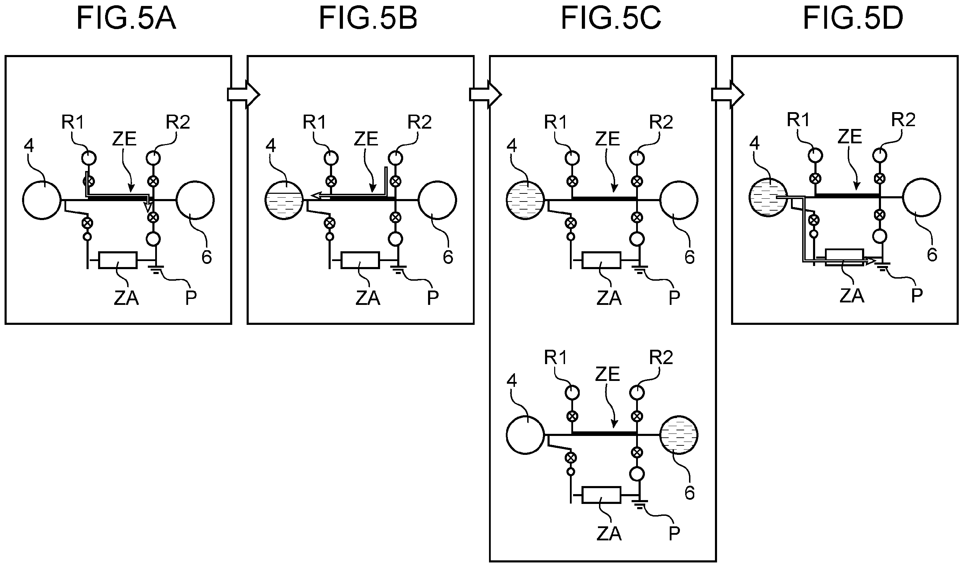

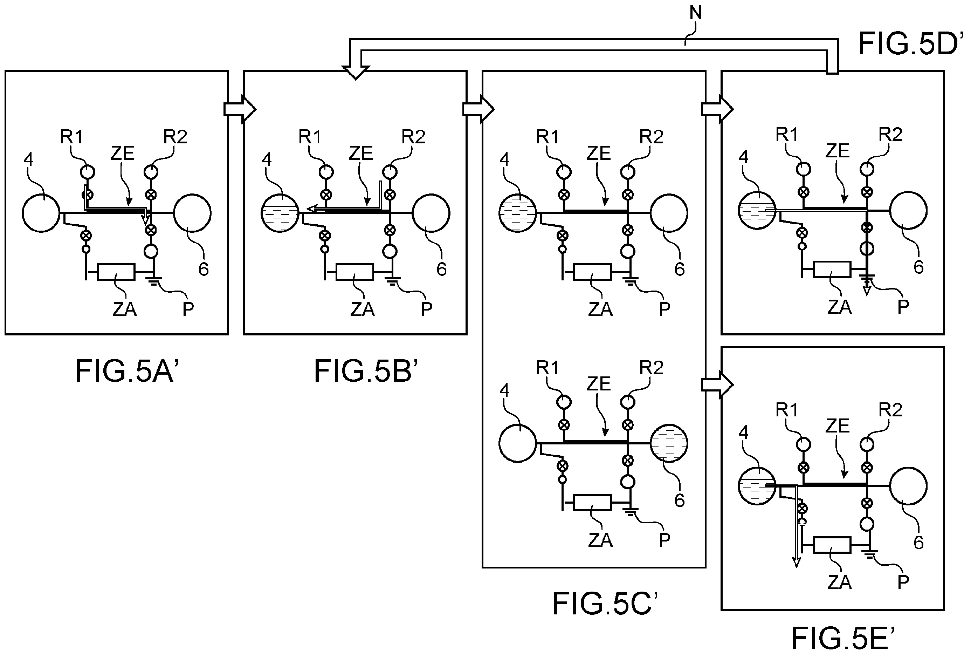

- les figures 5A' à 5E' sont des représentations schématiques du circuit de la figure 4 utilisé pour réaliser une solution diluée en cascade N fois,

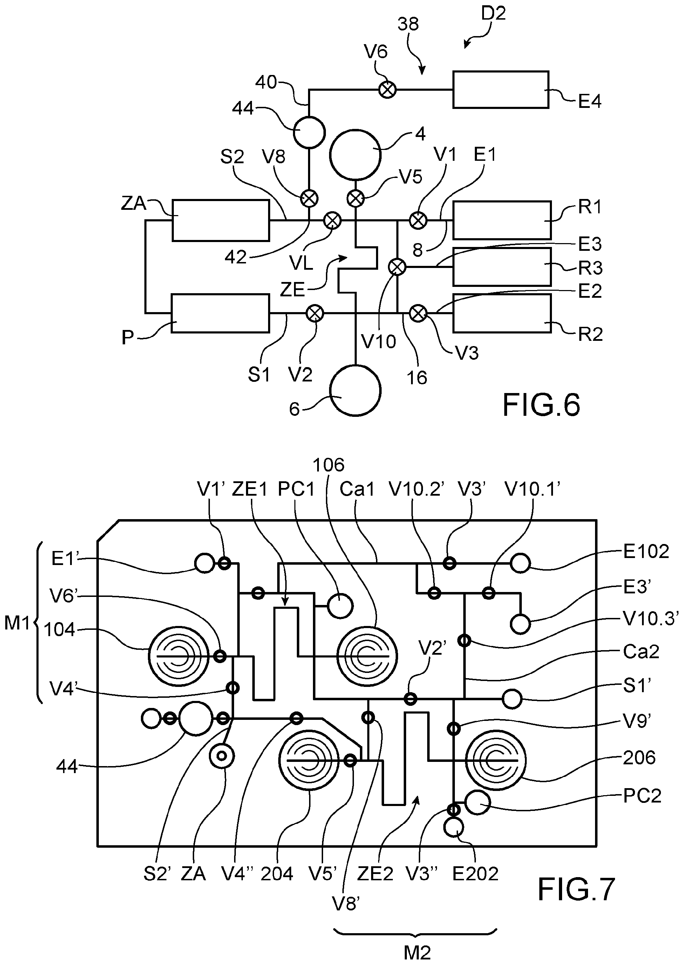

- la figure 6 est une représentation schématique d'un autre exemple de dispositif de préparation d'une solution,
- la figure 7 est une représentation schématique d'un autre exemple de réalisation d'un dispositif de préparation permettant de préparer deux solutions différentes à partir du même échantillon,

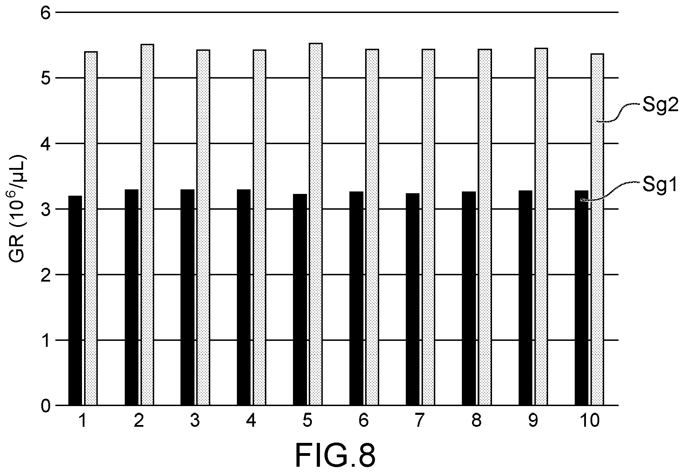

- la figure 8 est une représentation graphique des mesures du nombre de globules rouges par 10⁶/µl pour deux échantillons de sang : sang 1 et sang 2 et pour dix mesures, obtenues grâce au dispositif de la présente invention,

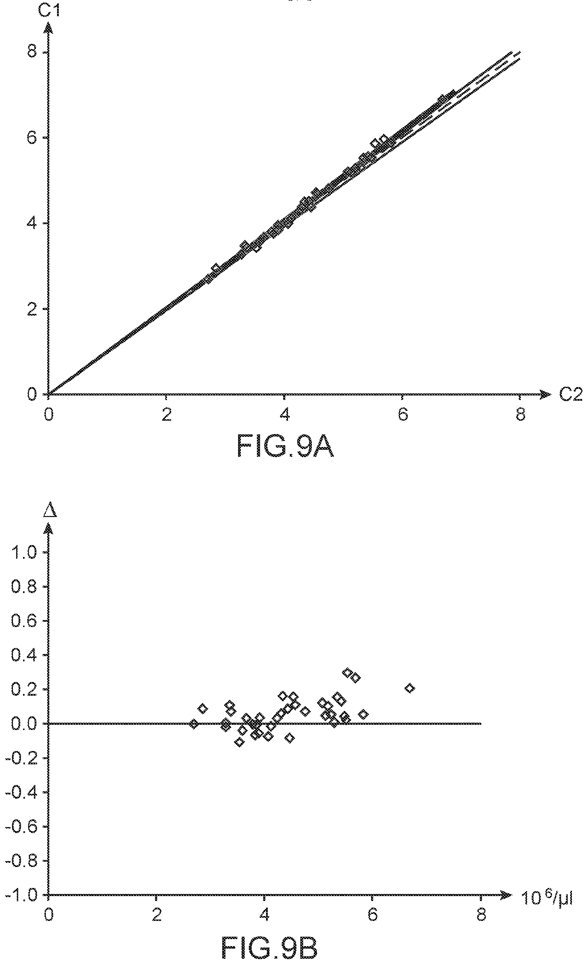

- la figure 9A est une représentation graphique de la corrélation avec la méthode de Passing Bablock, entre un comptage réalisé en imagerie sans lentille à partir d'une solution obtenue avec un dispositif de préparation selon l'invention et un comptage réalisé au moyen d'un automate d'hématologie ABX Pentra DX120, sur 37 échantillons de sang humain,
- la figure 9B est une représentation graphique des mesures de comptage de la figure 9A sous la forme des différences de Bland-Altman,

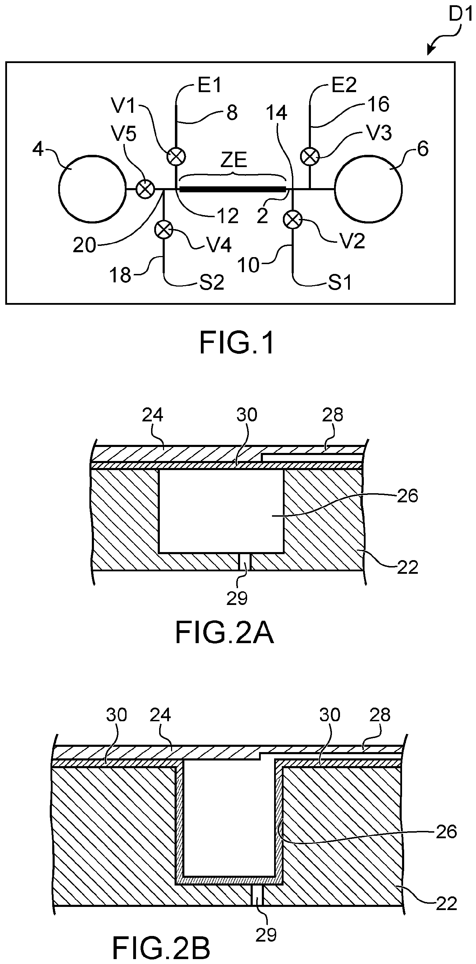

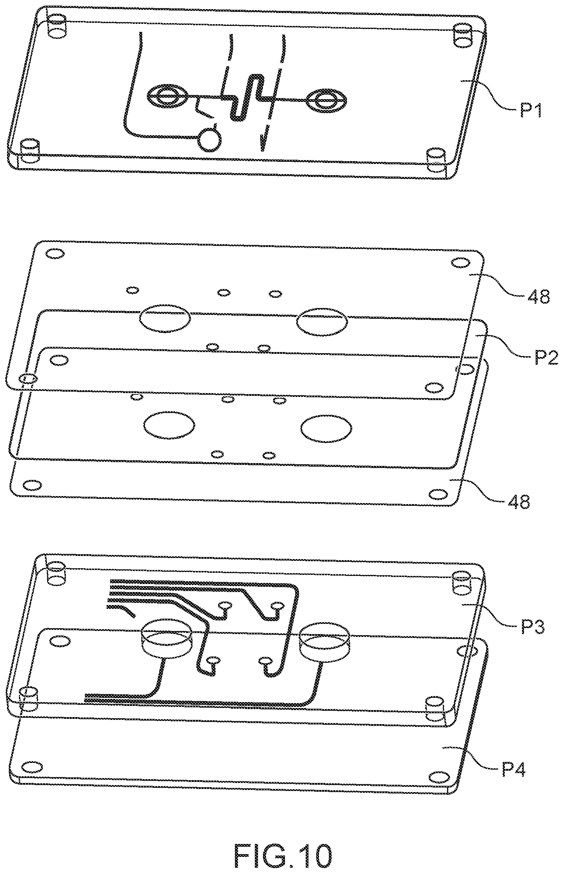

- la figure 10 est une vue en éclatée d'un exemple de réalisation pratique du dispositif de préparation de la figure 1.

### EXPOSÉ DÉTAILLÉ DE MODES DE RÉALISATION PARTICULIERS

Dans la description qui va suivre les fluides mis en oeuvre sont des liquides. La description s'applique également à des fluides gazeux.

Sur la figure 1, on peut voir une représentation schématique d'un dispositif de préparation D1 d'une solution liquide en vue de son analyse selon un exemple de réalisation.

La préparation consiste par exemple en une dilution de l'échantillon, en un traitement d'une partie des éléments de l'échantillon, par exemple une lyse dans le cas d'un sang, ou d'un marquage d'une aliquote de sang total avec un réactif. Par exemple, l'analyse de la solution ainsi préparée peut consister à dénombrer des éléments figurés du sang ou à mesurer une espèce soluble comme l'hémoglobine après lyse des globules rouges.

Le dispositif de préparation est de préférence réalisé sous la forme d'une carte fluidique destinée à coopérer avec un support de carte assurant l'activation pneumatique de la carte.

Le dispositif de préparation est destiné à préparer une solution comprenant un volume donné d'échantillon, par exemple du sang, et un volume donné de réactif.

Le dispositif de préparation D1 comporte un circuit fluidique comprenant une entrée d'alimentation en échantillon E1, une entrée d'alimentation en réactif E2, une sortie d'évacuation S1, par exemple reliée à une poubelle, et une sortie de collecte S2 destinée à collecter la solution préparée, par exemple en vue de son analyse.

Le circuit fluidique comporte également un canal principal 2, une première chambre de préparation 4 et une deuxième chambre de préparation 6. La première chambre 4 et la deuxième chambre 6 sont disposées de part et d'autre du canal principal 2 et sont reliées l'une à l'autre par le canal principal 2.

L'entrée d'alimentation en échantillon E1 est connectée au canal principal 2 par un premier canal secondaire 8, et la sortie d'évacuation S1 est connectée au canal principal 2 par un deuxième canal secondaire 10. Le premier canal secondaire 8 se connecte au canal principal 2 au niveau d'une première connexion 12, et le deuxième canal secondaire 10 se connecte au canal principal 2 au niveau d'une deuxième connexion 14. La portion du canal principal 2 délimitée entre les première 12 et deuxième 14 connexions forme une zone d'échantillonnage ZE. La zone d'échantillonnage a un volume Ve calibré correspondant à la quantité de l'échantillon qui participe à la préparation de l'échantillon. Pour un canal principal à section constante, Ve est donc défini par la section du canal principal entre les connexions 12 et 14 et la longueur du canal entre les connexions 12 et 14.

Le volume d'échantillon a prélevé est faible. En utilisant une zone d'échantillonnage de volume fixe, on mesure avec précision ce faible volume.

Comme nous le verrons dans la suite de la description, la zone d'échantillonnage a également pour fonction de favoriser le mélange entre la quantité d'échantillon et le réactif. De manière avantageuse, au moins une partie de la portion du canal principal 2 formant la zone d'échantillonnage ZE et, de préférence, toute la portion du canal principal formant la zone d'échantillonnage, présente une géométrie améliorant le mélange. Par exemple il présente une forme de serpentin ou toute autre forme bien connue de l'homme du métier, par exemple des canaux en trois dimensions séparant et regroupant le flux. En outre, par exemple la forme en serpentin permet de rendre le dispositif plus compact.

Dans un exemple de réalisation, on choisit de réaliser un canal pour la zone d'échantillonnage de section plus grande que celles des autres canaux afin d'avoir un volume d'échantillon plus important, tout en limitant l'encombrement.

Dans l'exemple représenté et de manière très avantageuse, l'entrée d'alimentation en réactif E2 est connectée au canal principal 2 en amont de la zone d'échantillonnage ZE par rapport à la première chambre de préparation 4 par un troisième canal secondaire 16, de sorte que le réactif provenant de l'entrée d'alimentation en réactif E2 circule dans la zone d'échantillonnage avant d'entrer dans la première chambre de préparation 4.

Les entrées E1 et E2 sont connectées directement à la zone d'échantillonnage, i.e. le liquide injecté par ces entrées entrent directement dans le canal principal 2 qui comprend la zone d'échantillonnage.

Dans la présente demande, on entend par «connectées directement à la zone d'échantillonnage» le fait que les longueurs des canaux entre les entrées et la zone d'échantillonnage sont minimales, i.e. au plus près, qu'aucune chambre ou jonction ne s'intercalent entre les entrées et la zone d'échantillonnage. Cette définition s'applique à toute autre entrée ou sortie et tout élément du dispositif qui sera décrit comme directement connecté à la chambre d'échantillonnage.

Dans l'exemple représenté, la sortie de collecte S2 est connectée au canal principal 2 par un quatrième canal secondaire 18 et une connexion 20 située entre la première chambre de préparation 4 et la première connexion 12.

Des moyens, par exemple des vannes, sont prévus pour isoler différentes parties du circuit fluidique pendant le fonctionnement.

Dans l'exemple représenté, une vanne V1 est prévue dans le premier canal secondaire 8, une vanne V2 est prévue dans le deuxième canal secondaire 10, une vanne V3 est prévue dans le troisième canal secondaire 16, une vanne V4 est prévue dans le quatrième canal secondaire 18 et une vanne V5 est prévue entre la première chambre de préparation 4 et la connexion 20. Il est à noter que la vanne V5 peut être omise, comme nous le verrons par la suite, la vanne V5 étant particulièrement avantageuse dans le cas où un pré-remplissage de la chambre de préparation 4 avec du réactif est effectué. Une vanne peut également être mise en oeuvre à l'entrée de la deuxième chambre de préparation 6.

La première chambre de préparation 4 est une chambre à volume variable entre un volume V0 égale à zéro ou proche de zéro, et un volume calibré Vc. De préférence, comme nous le verrons par la suite, la commande du volume de la première chambre 4 peut être telle qu'elle assure un volume V0 nul.

La première chambre de préparation 4 comporte au moins une paroi déformable ou mobile. Le volume de la première chambre 4 est le volume délimité au moins en partie par la paroi mobile ou déformable.

Le volume calibré Vc est le volume de la solution qui est à analyser, ce volume total défini avec le volume de la zone d'échantillonnage ZE, le taux de dilution souhaité ou le rapport entre la quantité d'échantillon et la quantité de réactif.

Le volume Vc est égal au volume maximal Vmax de la première chambre, améliorant la précision et la robustesse du dispositif.

Le volume de réactif à ajouter au volume Ve d'échantillon étant important, l'imprécision qui peut résulter de la mise en oeuvre d'une chambre à volume variable, en particulier à paroi déformable pour calibrer le volume de réactif, est négligeable.

Les moyens commandant l'expansion de la chambre 4 sont configurés pour fixer le déploiement de la chambre à Vc.

Par exemple, la première chambre 4 est une chambre à piston, par exemple une seringue. De manière avantageuse, la première chambre de préparation 4 comporte une paroi en matériau déformable élastiquement, de préférence en matériau hyperélastique.

Par « matériau hyperélastique », on entend que le matériau présente une surface apte à passer, de façon réversible, d'une première aire à une deuxième aire , la deuxième aire étant égale à 5 fois, voire 10 fois, voire 50 fois la première aire.

La variation du volume de la première chambre est obtenue par un actionnement pneumatique. L'actionnement pneumatique est contrôlé pour déformer la membrane de sorte qu'elle atteigne le volume Vc.

De préférence la première chambre 4 présente une forme facilitant le plaquage de la paroi déformable contre les parois indéformables de la chambre, par exemple elle a une forme cylindrique ou en forme de calotte sphérique ou portion d'ovoïde. Néanmoins du fait des propriétés hyperélastiques de la membrane, la chambre peut avoir une forme moins adaptée, par exemple une forme parallélépipédique pyramidale, avec des piliers formés par des éléments en protubérances d'une paroi de la chambre.

Les parois dites « indéformables » sont indéformables relativement à la membrane hyperélastique et sont indéformables au niveau de pression mis en oeuvre. La pression utilisée est par exemple comprise en +/- quelques dizaines de mbar et quelques bars, typiquement comprise ente +/- 500 mbar, par exemple égale à 250 mbar, ou 450 mbar, ce qui permet de déformer plus rapidement la paroi déformable.

Dans un exemple très avantageux, la première chambre 4 comporte des rainures formées dans une ou plusieurs parois de la chambre, différente(s) de la paroi déformable, permettant de chasser les bulles lors de l'amorçage de la chambre, ce qui permet de contrôler que le volume de liquide pénétrant dans la chambre soit le plus proche du volume attendu.

Sur les figures 2A et 2B, on peut voir un exemple de chambre à paroi déformable.

La chambre de préparation 4 est délimitée entre deux plaques rigides 22, 24. La plaque 22 comporte une cavité 26 pratiquée dans une face de la plaque 22, et la plaque 24 comporte au moins un canal 28 réalisé dans une face de la plaque 24 en regard de la face de la plaque 22 comportant la cavité 26. Une membrane 30 en matériau hyperélastique est tendue au-dessus de la cavité 26 et ferme la cavité. Une entrée de pression 29 est formée dans la plaque support 22 et débouche dans la cavité. A l'état repos, la membrane 30 est plus ou moins plaquée contre la plaque 24 et le volume de la chambre est égal à V0 (figure 2A). De préférence, à l'état repos ou au moins juste avant une étape d'échantillonnage, une pression est appliquée par l'entrée de pression 29 pour assurer un plaquage de la membrane 30 contre la plaque 24 et avoir V0 = 0.

Lorsqu'une aspiration est générée dans la cavité 26, la membrane 30 est déformée en direction de la cavité 26 jusqu'à venir se plaquer contre les parois de la cavité 26, dans cet état le volume de la chambre est maximale (figure 2B). Ce plaquage est rendu possible par les propriétés d'hyperélasticité de la membrane. Dans cette configuration la chambre peut être remplie.

En variante, la paroi déformable peut être déformée par des moyens piézoélectriques ou électromagnétiques par exemple intégrés à la membrane.

Les vannes peuvent être de tout type. Avantageusement elles sont actionnées pneumatiquement et comportent également une membrane hyperélastique.

Sur les figures 3A et 3B, on peut voir un exemple d'une telle vanne. La membrane 32 est tendue au-dessus d'une cavité 34 connectée à une source de pression. La cavité 34 est réalisée dans un support, par exemple la plaque 22, et un autre support, par exemple la plaque 24 repose sur la membrane. La plaque 24 comporte un canal discontinu formé par des portions de canal 36 structurées dans la face du support 24, en contact avec la membrane 32. Les portions de canal se raccordent par la cavité. De préférence une pression est appliquée par l'entrée 37 afin d'assurer le plaquage de la membrane contre la plaque 24 et la fermeture de la vanne, la circulation entre les canaux est alors interrompue (figure 3A). En générant une dépression dans la cavité 34 par l'entrée 37, la membrane 32 se déforme et permet la circulation entre les deux portions de canal 36 (figure 3B). La circulation du fluide est symbolisée par les flèches. De préférence la membrane 32 et la membrane 30 sont formées par le même film en matériau hyperélastique. En variante, un doigt mécanique peut agir sur la membrane.

En variante, la plaque 24 comporte un canal continu, et la membrane vient se plaquer dans le fond du canal.

En variante, des vannes à actionnement piézoélectriques ou électromagnétiques peuvent être mises en oeuvre.

L'actionnement des vannes induit un déplacement d'un volume mort de fluide. Afin de limiter les effets sur la précision du rapport de volume entre l'échantillon et le réactif, les vannes ont de préférence un faible volume, par exemple 100 fois plus petit que les volumes des chambres de préparation. Les vannes peuvent être normalement ouvertes ou normalement fermées.

La deuxième chambre de préparation 6 est également à volume variable. Les différentes variantes de première chambre de préparation décrites ci-dessus s'appliquent à la deuxième chambre de préparation, tels que la forme cylindrique ou en calotte sphérique, les rainures de drainage...

La mise en oeuvre de deux chambres à volume variable permet de transférer facilement le fluide entre les deux chambres à travers la zone d'échantillonnage et de collecter tout l'échantillon de la zone d'échantillonnage ZE.

Avantageusement la deuxième chambre de préparation 6 a un volume supérieur ou égal à celui de la première chambre de préparation. De préférence, les deux chambres 4 et 6 ont le même volume calibré Vc qui est égal avantageusement au volume maximal des chambres.

En variante la deuxième chambre de préparation a un volume différent de celui de la première chambre 4, qui peut être inférieur à celui de la première chambre de préparation 4. La deuxième chambre 6 est telle qu'elle peut être vidée entièrement comme cela sera expliqué ci-dessous.

Sur la figure 4A, on peut voir une représentation schématique du circuit fluidique complet formé par le circuit du dispositif de préparation D1 et un support de carte Sc.

Le support de carte assure la connexion de l'entrée d'alimentation de l'échantillon E1 à un réservoir R1 contenant l'échantillon, et la connexion de l'entrée d'alimentation en réactif E2 à un réservoir R2 contenant le réactif, la sortie S1 à une zone poubelle P et la sortie S2 à une zone d'analyse ZA de la solution à analyser. La zone d'analyse comporte des moyens pour détecter et quantifier une espèce figurée ou soluble présente initialement dans l'échantillon. Les moyens peuvent mettre en oeuvre une mesure électrique, optique, électrochimique... Par exemple la zone d'analyse comporte des moyens optiques permettant de compter/quantifier les éléments et/ou des moyens permettant de déterminer les différents types d'élément. Par exemple il peut s'agir d'un cytomètre de flux et/ou des moyens de mesure d'impédance type compteur Coulteur et/ou des moyens de mesure optique type imagerie et/ou des moyens d'analyse colorimétrique.

En variante, la zone d'analyse ZA est intégrée au dispositif de préparation.

Le support de carte assure également la commande des vannes et de la ou des chambres à volume variable. En outre le support de carte comporte un circuit électronique de commande des vannes et de la ou des chambres à volume variable.

Le support de carte comporte également un circuit pneumatique relié à la première chambre de préparation ou à la première et à la deuxième chambre de préparation, et relié à une source de pression D. La source de pression D comporte une source de surpression Ds ou une source de dépression Dd. Dans une variante avantageuse, les réservoirs R1 et R2 sont à la pression atmosphérique.

L'étanchéité entre le carte support et le dispositif est obtenue par exemple au moyen de joints.

Le support de carte comporte une unité électronique commandant les différentes vannes et chambres selon des protocoles préétablis.

Sur les figures 4B et 4C, on peut voir une représentation schématique de la première chambre de préparation 4 sur le support de carte Sc comportant un circuit pneumatique Sp commandé par une unité de commande UC, par exemple un ordinateur. Le circuit pneumatique Sp comporte par exemple une vanne trois voies EV connectant la cavité de la chambre 4 à la source de pression D. La vanne trois voies permet de connecter la cavité de la chambre 4, soit à la source de surpression Ds, soit à la source de dépression Dd.

Sur la figure 4B, et avant une phase de préparation l'unité de commande UC commande la vanne EV de sorte qu'elle connecte la cavité de la chambre 4 avec la source de surpression, ce qui assure que le volume de la chambre V0 = 0.

En phase de préparation l'unité de commande UC commande la vanne EV pour qu'elle connecte la cavité à la source de dépression, ce qui augmente le volume de la chambre et aspire l'échantillon. En commandant la vanne EV, le volume de la chambre est augmenté et diminué alternativement permettant notamment les allers-retours entre les chambres 4 et 6.

Il sera compris que le support de carte Sc comporte plusieurs vannes pour assurer l'alimentation contrôlée en surpression ou dépression des cavités des différentes chambres de préparation, par exemple autant de vannes que de chambres de préparation, chacune étant commandée individuellement.

Un exemple de fonctionnement du dispositif de préparation D1 va maintenant être décrit à partir des figures 5A à 5D.

Avantageusement, initialement au moins la vanne gérant la pression dans la cavité de la première chambre 4 est commutée pour qu'une surpression s'applique dans la cavité de la chambre 4 afin que le volume de la chambre 4 soit V0 = 0.

Une phase d'échantillonnage est réalisée. Les vannes V1 et V2 sont ouvertes et la source de dépression connectée à la sortie S1 est actionnée, l'échantillon est aspiré du réservoir R1. La source de dépression est activée jusqu'à ce que l'échantillon remplisse le premier canal secondaire 8, la zone d'échantillonnage ZE entre les connexions 12 et 14. De préférence, la source de dépression est activée jusqu'à ce que l'échantillon remplisse tout le deuxième canal secondaire 10 ou une partie de celui-ci, afin d'être sûr que la zone d'échantillonnage ZE est remplie avec l'échantillon de manière homogène.

Par exemple la source de dépression est commandée en temps. Le temps d'activation de la source de dépression a été calibré. Des essais ont été préalablement faits pour déterminer la durée nécessaire au remplissage, une marge de précaution est prise. En variante, on peut envisager une commande visuelle par exemple dans le cas du sang.

La quantité d'échantillon dans la zone d'échantillonnage ZE est l'aliquote de volume Ve.

Le dispositif est dans l'état représenté sur la figure 5A.

Ensuite, une phase d'injection du réactif a lieu. Les vannes V1 et V2 sont refermées. Ensuite les vannes V5 et V3 sont ouvertes. La vanne EV est commutée, connectant la source de dépression à la cavité de la première chambre 4, ce qui provoque une augmentation du volume de la première chambre de préparation 4. Par exemple dans le cas d'une chambre avec une paroi hyperélastique, la membrane se déforme, le volume de la chambre augmente, ce qui crée une dépression dans le circuit, l'échantillon contenu dans la zone d'échantillonnage est aspiré dans la première chambre de préparation 4, provoquant l'aspiration du réactif contenu dans le réservoir R2. Le réactif circule dans la zone d'échantillon ZE après que l'aliquote a été aspirée, ce qui permet avantageusement de collecter une quantité d'échantillon par exemple restée dans le canal principal. Le volume de la chambre de préparation augmentant avec le liquide injecté, le risque d'apparition de bulles est très réduit.

Le temps de connexion entre la source de dépression et la cavité de la première chambre 4 est suffisamment long pour s'assurer que la chambre atteint le volume Vc.

La première chambre de volume Vc contient un volume Ve d'échantillon et un volume Vc-Ve de réactif. La première chambre de préparation 6 est complètement pleine à la fin du remplissage, ce qui permet de calibrer le volume Vc-VE de réactif. Ainsi, puisque les volumes Ve et Vc sont calibrés, le rapport entre le volume d'échantillon et le volume de réactif est connu précisément. Par exemple dans le cas d'une dilution, le taux de dilution et la concentration des éléments de l'échantillon sont connus précisément. En outre, à chaque nouvelle opération de préparation, le même rapport entre les volumes est obtenu. Le dispositif a donc un fonctionnement très robuste.

Le dispositif est dans l'état représenté sur la figure 5B.

Lors d'un fonctionnement avantageux, une phase de mélange de la solution a lieu. Par exemple, on fait circuler la solution entre les deux chambres de préparation 4 et 6.

Pour cela on commute la vanne EV pour alimenter la cavité de la première chambre 4 en surpression provoquant une réduction de la chambre 4 et simultanément le volume de la deuxième chambre 6 est augmenté en alimentant en dépression la cavité de la chambre 6. La solution est alors chassée de la première chambre 4 et est aspirée dans la deuxième chambre. Lors de ce transfert entre les deux chambres, la solution circule dans le canal principal 2 et donc dans la zone d'échantillonnage ZE.

Il est à noter qu'avant le transfert du mélange de la chambre 4 vers la chambre 6, la zone d'échantillonnage est remplie de réactif. Ce volume Ve de réactif va être ajouté au volume Vc-Ve de réactif présent dans la chambre 4 et est à prendre en compte dans les calculs de dilution ou dans les observations de réaction. A la fin de la phase de transfert entre les chambres la solution obtenue a un volume Vc + Ve. Le taux de dilution obtenu est Ve/(Ve+Vc).

En alternant l'augmentation et la réduction de volumes des deux chambres 4, 6, par commutation des vannes pneumatiques, la solution fait des allers et retours dans la zone d'échantillonnage ZE. Ces allers-retours ont pour avantage d'améliorer le mélange entre les deux liquides, notamment lorsque la zone d'échantillonnage a une forme de serpentin ou une autre forme favorisant le mélange et par exemple une réaction telle qu'une lyse. En outre, ils permettent de collecter tout reste d'échantillon et les éléments à analyser qui seraient encore restés dans la zone d'échantillonnage. Ainsi la perte en échantillon peut être réduite et la préparation peut être très précise.

Tout ou partie du volume Vc de la solution peut être transféré dans la deuxième chambre 6, une partie pouvant rester dans la zone d'échantillonnage. De préférence, un grand volume de solution circule dans la zone d'échantillonnage ZE pour collecter les restes d'échantillon. Par exemple tout le volume Vc de la solution circule entre les deux chambres de préparation 4, 6.

Le nombre d'allers-retours est choisi en fonction des liquides mis en jeu et des volumes relatifs Vc et Ve, du type de réaction, s'il s'agit d'une dilution, d'une lyse, d'un marquage...

Le dispositif est dans l'état représenté sur la figure 5C.

Enfin, la solution est renvoyée dans la première chambre de préparation 4, puis est envoyée dans la zone d'analyse ZA. Pour cela les vannes V4 et V5 sont ouvertes et la solution est par exemple aspirée par la sortie S2.

Le dispositif est dans l'état représenté sur la figure 5D.

Lors d'une dernière phase, le circuit est vidé et/ou rincé pour une autre préparation et analyse, par aspiration au niveau de la sortie S1 vers la zone poubelle.

En combinant une zone d'échantillonnage à volume fixe pour mesurer le volume d'échantillon et une chambre de préparation à volume variable pour mesurer le volume de réactif, on réalise un dispositif de conception relativement simple et offrant une très bonne précision.

Les deux chambres à volume variable peuvent être commandées par une seule commande ou deux commandes distinctes.

En variante, la deuxième chambre 6 peut avoir un volume maximal inférieur au volume Vc de la première chambre 4, une partie seulement du volume Vc de la première chambre 4 est alors transférée.

Dans un mode de fonctionnement très avantageux, la première chambre de préparation est déjà partiellement remplie avec du réactif avant l'injection de l'échantillon, par exemple du sang, ce qui favorise l'homogénéisation du mélange et les réactions au sein du mélange le cas échéant, et évite des pertes d'échantillon et donc une perte de précision.

Par exemple, avant la phase d'échantillonnage, est prévue une phase de pré-remplissage de la première chambre de préparation 4 avec une quantité de réactif. Pour cela, seules les vannes V3 et V5 sont ouvertes, et la source de dépression provoque la déformation de la paroi hyperélastique, le réactif est alors aspiré à travers le canal principal. La quantité de réactif injectée dans la première chambre 4 est inférieure à Vc-Ve pour que toute l'aliquote puisse ensuite être injectée dans la première chambre 4.

Ensuite, les vannes V3 et V5 sont fermées et la phase d'échantillonnage peut commencer. Une vanne V5 est disposée entre la première chambre 4 et la connexion 12, et est fermée lors de la phase d'échantillonnage, pour éviter une aspiration du réactif contenu dans la première chambre de préparation 4 lors de l'aspiration de l'échantillon dans la zone d'échantillonnage ZE.

Dans le cas où les deux chambres 4 et 6 sont des chambres à volume variable, les deux chambres peuvent être interverties et l'actionnement des vannes et la commande des sources de dépression sont tels que l'aliquote est en premier injecté dans la chambre 6.

Dans un autre exemple de réalisation, les entrées d'alimentation E1 et E2 sont interverties. Dans ce cas, lors de l'injection du réactif, celui-ci ne circule pas dans la zone d'échantillonnage. De manière avantageuse, la solution circule dans la zone d'échantillonnage entre les deux chambres de préparation pour collecter l'échantillon.

De préférence, le premier canal secondaire 8 et le quatrième canal secondaire 18 se connectent au canal principal 2 en des points différents, afin de réduire le risque d'aspirer de l'échantillon contenu dans le premier canal secondaire 8 lors de la collecte de la solution en vue de son analyse. De préférence, le quatrième canal secondaire 18 se connecte au canal principal au plus près de la première chambre de préparation 4.

De manière avantageuse, la sortie S2 est connectée directement à la zone d'échantillonnage ce qui permet de rincer le canal secondaire 18 destiné à transférer la solution vers les moyens de détection.

Pendant un cycle de dilution l'échantillon circule dans le canal 2 en traversant la zone d'échantillonnage ZE et en remplissant alternativement les chambres 4 de préparation 4 et 6. Pendant ces différentes étapes le canal 18 peut être contaminé par l'échantillon en raison de l'intersection 20, par exemple par effet de diffusion, par des microfuites à travers les vannes etc...

En connectant directement la sortie S2 à la zone d'échantillonnage ZE on peut appliquer le protocole de rinçage suivant avec le réactif. Le protocole comprend le maintien de la solution préparée dans la chambre de préparation 4 en fermant la vanne V5, puis le rinçage du canal 8 en ouvrant les vannes V3 et V4, le réactif s'écoule vers S2. Le canal secondaire 18 est alors nettoyer.

Dans l'exemple représenté et de manière très avantageuse, la sortie S1 est directement connectée à la zone d'échantillonnage ZE. Lors du remplissage de la zone ZE, les vannes V1 et V2 sont ouvertes, l'échantillon circule du réservoir R1 vers la sortie S1 reliée à une poubelle et remplit la zone ZE sans circuler à travers les chambres de préparation. Ainsi il n'est pas requis de nettoyer les chambres avant l'étape de préparation (dilution, lyse...) au moyen du réactif contenu dans le réservoir R2 pour éviter une erreur dans le volume de l'échantillon. Le procédé de préparation est simplifié et plus rapide.

A titre d'exemple le volume calibré Vc est de quelques dizaines de µl à quelques centaines de µl.

Sur la figure 6, on peut voir un autre exemple de dispositif de préparation particulièrement avantageux.

Le dispositif de préparation D2 se distingue du dispositif de préparation D1 par le fait qu'il comporte des moyens de lavage/rinçage du circuit par un liquide de lavage/rinçage distinct du réactif.

Nous reprendrons les mêmes références que celles du dispositif D1 pour désigner les éléments ayant les mêmes fonctions.

Le dispositif D2 comporte le canal principal 2, les entrées d'alimentation E1, E2, la sortie d'évacuation S1, la sortie de collecte S2, les deux chambres de préparation 4 et 6. Les vannes V1, V2, V3 et V4 sont également disposées dans le circuit comme dans le dispositif D1. La vanne V5 est également prévue au moins pour une phase de pré-remplissage en réactif, comme cela a été décrit ci-dessus.

Le dispositif D2 comporte en outre une troisième entrée E3 d'alimentation en liquide de lavage connectée à un canal secondaire qui est branchée sur les canaux secondaires 8 et 16 chacun connecté aux entrées E1 et E2. L'entrée E3 est destinée à être connectée à un réservoir R3 de liquide de lavage. L'entrée E3 comporte également une vanne trois voies V10 permettant de connecter le réservoir R3 soit vers le premier canal secondaire 8, soit vers le troisième canal secondaire 16.

En variante tout ou partie des vannes trois voies est remplacée par des vannes deux voies en série avec un canal avec jonction en T.

Le liquide de lavage est utilisé pour nettoyer tout le circuit, ainsi que la chambre d'analyse en vue de la réutiliser pour une autre analyse.

En outre, le dispositif comporte également des moyens 38 pour générer des bulles de gaz de volume calibré dans le quatrième canal secondaire 18 débouchant sur la sortie S2. Les moyens 38 comportent un canal secondaire 40 connecté par une connexion 42 au quatrième canal secondaire 18 entre la vanne V4 et la sortie S2, le canal secondaire 40 est muni d'une entrée d'alimentation en gaz E4 destinée à être connectée à une source de gaz, par exemple de l'air, une chambre à volume variable 44, une vanne V6 entre l'entrée E4 et la chambre 44 et une vanne V8 entre la chambre 44 et la connexion 42.

La chambre 44 est destinée à générer des bulles de gaz de volume calibré. Elle est par exemple d'une structure similaire à la première chambre 4, elle comporte par exemple au moins une paroi déformable élastiquement présentant des propriétés d'hyperélasticité. En variante, la chambre 44 comporte une seringue ou un piston.

Les bulles de gaz ont par exemple un volume de 30 µl à 60 µl, par exemple de 2 à 4 fois le volume de la zone d'analyse ZA.

Par exemple, une bulle de gaz calibrée est produite avant que la solution soit envoyée vers la sortie S2. La bulle d'air et la solution sont aspirées via la dépression de la poubelle et/ou l'application d'une pression sur la membrane dans la chambre. La présence de la bulle d'air permet d'éviter la dilution de la solution durant son transfert vers la zone d'analyse ZA.

L'avantage de la connexion directe de la sortie S2 à la zone ZE décrit en relation avec D1 existe également pour D2. On peut prévoir un rinçage avec un liquide de rinçage.

Le dispositif selon l'invention présente l'avantage de permettre de préparer des solutions à différents taux de solution. Il est donc relativement flexible et adaptable.

Selon un exemple de fonctionnement, la solution est préparée directement au taux de dilution souhaité.

L'invention présente un fonctionnement robuste en permettant d'éviter un calibrage en temps, en effet le calibrage en temps dépend de beaucoup de paramètres et est donc peu robuste.

De manière avantageuse, selon un autre exemple de fonctionnement, la solution au taux de dilution souhaité est obtenue en plusieurs fois.

Les étapes de fonctionnement sont schématisées sur les figures 5A ' à 5E'.

Les étapes 5A' à 5 C' sont identiques aux étapes 5A à 5C respectivement. A la fin de l'étape 5C', a été préparée une première solution So1 à un premier taux de dilution fixé par le volume Ve de la zone d'échantillonnage et le volume Vc de la chambre de préparation. La solution So1 se trouve dans la chambre 4. La chambre 4 est vidée en envoyant la solution So1 vers la poubelle (figure 5D'). A la fin de cette étape, la zone d'échantillonnage ZE est remplie de la solution So1. On a donc prélevé un volume Ve de la solution So1. On peut alors appliquer de nouveau l'étape 5B' (flèche N), en injectant le diluant via E2 qui entraîne le volume Ve de So1 dans la chambre 4. Et on répète l'étape 5C'. On a préparé une solution So2 avec un nouveau taux de dilution

Ensuite on peut soit réaliser une nouvelle dilution en réalisation l'étape 5D' puis l'étape 5B', soit transférer So2 vers la zone d'analyse via S2.

Le taux de dilution de la solution finale est le produit des taux de dilution des solutions successivement obtenues. Si la chambre de préparation est déformée à Vc à chaque étape de dilution, le taux de dilution est le même pour toutes les étapes de dilution et est par exemple égal à T, le taux de dilution final après n étapes de dilution est égal Tⁿ. Par exemple si le taux de dilution est de 10% à chaque étape, il est possible d'obtenir successivement des taux de dilution de 1%, 0,1%...A chaque étape de dilution les solutions obtenues successivement So1, So2....peuvent être soit envoyées vers la sortie S1 pour être évacuées, soit envoyées vers la sortie S2 pour être analysées.

En variante, on peut envisager de faire varier le taux de dilution entre deux phases de dilution, en modifiant le volume calibré Vc de la chambre de préparation.

Cette possibilité de réaliser des dilutions successives est particulièrement intéressante et recherchée dans de nombreux tests biologiques, et elle est complexe à réaliser avec précision en microfluidique avec les systèmes de l'état de la technique.

La dilution successive peut être mise en oeuvre pour la numération d'objets en grande quantité, pour laquelle des taux de dilution importants sont recherchés. Dans les dispositifs de l'état de la technique, l'obtention de taux de dilution élevés pose des problèmes de dimensionnement puisque des gros rapports de volume sont à contrôler. Par exemple une dilution de 0,1% peut être compliquée à dimensionner. Grâce au dispositif de préparation d'échantillon de l'invention, on peut réaliser trois dilutions successives à 10% ou 2 dilutions de (0,1%)^{1/2}, ces dilutions successives mettant en oeuvre des rapports de volumes plus faibles.

Un outre, la réalisation de dilutions successives offre la possibilité de mesurer ou de vérifier la valeur du taux de dilution. Par exemple, soit C₀ la condition initiale et R le ratio connu ou non du système fluidique. Un premier cycle mesure une concentration C₁ le deuxième cycle mesure une concentration C₂. La valeur du ratio exacte est R = C₁/C₂. On peut alors remonter à la concentration initiale avec C₀=C₁×R=C₁²/C₂.

Ainsi la valeur de R peut être qualifiée sans avoir à connaître de façon précise initialement Vc et/ou Ve. De plus, puisqu'il est possible de déterminer le rapport de dilution de chaque dispositif, les contraintes technologiques sur la reproductibilité d'une carte à l'autre, ou d'une série d'expériences à l'autre peuvent être relâchées.

Sur la figure 7, on peut voir un autre exemple de réalisation d'un dispositif de préparation permettant de préparer deux solutions différentes à partir du même échantillon.

Le dispositif de préparation D3 combine deux modules de dilutions M1 et M2. Chaque module M1, M2 comporte un circuit fluidique formé de plusieurs canaux. Par exemple, le module M1 permet de réaliser une dilution et le module M2 permet de réaliser une lyse.

Chaque module M1, M2 comporte ses propres chambres de préparations 104, 108 et 204, 208, et sa propre zone d'échantillonnage ZE1 et ZE2 respectivement.

L'entrée d'alimentation en échantillon E1' est commune aux deux modules. La sortie d'analyse S2' et la sortie S1' vers la poubelle sont également communes aux deux modules.

Chaque module M1, M2 comporte une entrée d'alimentation E102, E202 en réactif R1, R2.

Des vannes V1', V2', V3', V3", V4', V4" V5', V6', V8', V9' sont également prévues dans les différents canaux.

Les deux circuits sont connectés afin que, lors de la phase d'échantillonnage, la zone d'échantillonnage ZE2 du module M2 soit alimentée en échantillon provenant de l'entrée E1' via la zone d'échantillonnage ZE1 du module M1.

La sortie d'analyse S2' est connectée aux sorties des premières chambres des préparations 104, 204.

L'entrée d'alimentation E102 en réactif R1 est connectée au canal principal du module M1 par un canal secondaire Ca1.

Le dispositif D3 comporte en outre une troisième entrée E3' d'alimentation en liquide de lavage R3 connectée au canal secondaire Ca1 qui est connecté au module M1, et au module M2 par l'intermédiaire du module M1. L'entrée E3' est destinée à être connectée à un réservoir de liquide de lavage.

Dans ce dispositif, le réactif R1 sert pour la dilution dans le module M1 et pour l'amorçage/rinçage de la carte. Le réactif R3 est ajouté pour le lavage et est injecté par la troisième entrée E3'. Le canal secondaire Ca1 permet avantageusement de mutualiser les entrées aux niveaux des serpentins et chambres.

Des vannes V10.1', V10.2' permettent de connecter l'entrée E3' à l'un et/ou l'autre des modules M1 et M2 et permet au liquide de rinçage de circuler dans les différents canaux des modules M1 et M2.

Dans cet exemple, une vanne V10.3' est prévue dans un canal Ca2 entre la troisième entrée E3' la sortie S1', celle-ci sert à rincer la zone de contact entre le réactif R3 et R2 avec le réactif R2 pour éviter les contaminations en réactif R3 dans le cas où le réactif R3 serait incompatible avec l'échantillon, par exemple du sang.

Dans cet exemple, le dispositif D3 comporte également une chambre 44 destinée à former des bulles de gaz dans le circuit, connectée au niveau de la sortie S2', de manière similaire au dispositif D2 de la figure 6. Les bulles de gaz ont la même fonction que dans le dispositif D2.

Les modules M1 comporte avantageusement une chambre de pré-remplissage PC1 sur le canal reliant l'entrée de réactif E102 à la zone d'échantillonnage ZE1.

Les modules M2 comporte avantageusement une chambre de pré-remplissage PC2 sur le canal reliant l'entrée de réactif E202 à la zone d'échantillonnage ZE2.

Les chambres de pré-remplissage PC1 et PC2 sont également des chambres à volume variable permettant leur remplissage par aspiration.

Les chambres de pré-remplissage permettent de calibrer le volume de réactifs injectés dans les chambres 104 et 204 afin d'avoir un mélange et/ou une réaction encore plus maîtrisés. Les chambres de pré-remplissage peuvent être mises en oeuvre dans tous les dispositifs de préparation décrits ci-dessus. Elles s'appliquent généralement à tout dispositif selon l'invention. Elles peuvent être placées au niveau des entrées d'échantillon en aval de la vanne associée à chaque entrée. En outre, toutes les entrées d'alimentation en échantillon ou une partie d'entre elles sont équipées de telles chambres de pré-remplissage.

Un exemple de fonctionnement du dispositif D3 va maintenant être décrit. Dans cet exemple, les réactifs sont injectés dans les chambres 104, 204 avant l'échantillon.

On considère initialement un état dans lequel toutes les vannes sont fermées.

Tout d'abord a lieu une étape de pré-remplissage en réactifs dans les chambres 104 et 204 via les chambres de pré-remplissage PC1 et PC2.

Pour cela, les vannes V3' et V3" sont ouvertes et les chambres de pré-remplissage sont activées pour aspirer les réactifs R1 et R2, i.e. leur volume est augmenté.

Les vannes V3' et V3" sont fermées.

Les vannes V6' et V5' sont ensuite ouvertes et les volumes des réactifs R1 et R2 contenus dans les chambres de pré-remplissages PC1 et PC2 sont transférés vers les chambres 104 et 204.

Toutes les vannes sont ensuite fermées et l'injection du sang est commencée.

Lors de la phase d'échantillonnage, seules les vannes V1', V8' et V9 sont ouvertes, l'échantillon remplit les zones d'échantillonnage ZE1, ZE2. Cette phase dure un temps calibré.

Ensuite les vannes V1', V8' et V9 sont fermées. Débute ensuite l'étape de d'injection des réactifs restants, lors de laquelle les vannes V3', V3", V5' et V6' sont ouvertes. Chaque aliquote et son réactif sont injectés dans leur chambre de préparation 104,204. Les vannes V3', V3" sont fermées.

Les mélanges sont ensuite transvasés de la chambre 104, 204 à la chambre 108, 208 et effectuent des allers-retours permettant d'améliorer le mélange.

Comme mentionné ci-dessus, le module M1 est utilisé pour réaliser une dilution et le module M2 est utilisé pour réalise une lyse. On peut prévoir de continuer à mélanger le réactif R2 et le sang dans le module M2 en les transvasant entre les deux chambres 204 et 206, tout en analysant simultanément le mélange obtenu dans le module M1.

En variante, il peut être envisagé de stocker les solutions prêtes dans les chambres 104, 204, puis de le envoyer vers la sortie S2' en vue de leur analyse dans la zone ZA. Lors de cette dernière étape, l'envoi des deux solutions est successif.

On réalise de préférence le rinçage avec le réactif ayant servi à préparer la solution à analyser. Avant l'analyse de la solution préparée dans le module M1, on rince la zone ZA avec le réactif R1, et avant l'analyse de la solution préparée dans le module M2, on rince la zone d'analyse avec le réactif R2.

Par exemple, à la fin des analyses, on rince les deux modules ave le réactif R3.

Entre le passage des deux solutions, une étape de rinçage avec le fluide de rinçage provenant de E3' a eu lieu.

Les étapes d'injection et de mélange des deux solutions peuvent être réalisées simultanément.

Il sera compris que plus de deux modules peuvent être mis en oeuvre.

Dans un autre exemple, le dispositif comporte au moins deux entrées d'alimentation en deux échantillons différents et une ou plusieurs entrées d'alimentations en réactifs différents.

Il sera compris que toutes les configurations sont envisageables, par exemple on peut envisager de préparer une première solution à partir d'un échantillon et d'un réactif, puis à partir d'un échantillon de cette première solution, de préparer avec une autre réaction une deuxième solution.

A titre d'exemple non limitatif, le dispositif de préparation peut avoir les dimensions suivantes :
- Le dispositif a sensiblement la taille d'une carte de crédit, par exemple entre 5 cm et 10 cm de côté.
- Il présente une épaisseur d'1 mm à quelques mm, par exemple 3mm.
- Le canal principal en dehors de la zone d'échantillonnage, et les canaux secondaires ont une section carrée ou rectangulaire de quelques centaines de µm de côté, par exemple 300µm×300µm.
- La zone d'échantillonnage a une section carrée ou rectangulaire de quelques centaines µm de côté, par exemple 700µm×300µm.
- Les chambres de préparation ont un volume maximal de l'ordre du µl à quelques centaines de µl, par exemple 200 µl. Par exemple elles ont une forme en calotte sphérique ou cylindrique, par exemple 3 mm de haut et 5 mm à 10 mm de diamètre.

Les canaux et les chambres présentant les dimensions ci-dessus sont par exemple réalisés par embossage, moulage, ou par usinage mécanique.

En utilisant des techniques de structuration utilisées dans la microélectronique, on peut réaliser des canaux et des chambres présentant des dimensions de 10 fois à 100 fois plus petites que les dimensions ci-dessus.

Nous allons maintenant décrire un essai montrant la robustesse et la fiabilité du dispositif de préparation selon l'invention.

Une dilution de sang à 0,16% (1/600) est obtenue par une double dilution avec un dispositif tel que le dispositif D2 en utilisant un réactif de sphérisation des globules rouges, en vue de réaliser un comptage en imagerie sans lentille. Un tel comptage est par exemple décrit dans le document FR3060746.

Le dispositif comporte un serpentin de calibration de 10 µl et des chambres de préparation de volume 235 µl permettant d'obtenir un taux de dilution de 4% (1/24,5) qui permet après une double dilution d'atteindre le taux de dilution de 0,16% (1/600) souhaité.

Sur la figure 8, on peut voir représenté le nombre de globules rouges GR par µl pour deux échantillons de sang : Sg1 et Sg2 et pour dix mesures successives réalisées avec le même dispositif microfluidique.

Des coefficients de variation de 1,1% et 0,9% sont obtenus pour Sg1 et Sg2 respectivement. Il en résulte donc que le dispositif de préparation présente de très bonnes performances en termes de répétabilité de préparation et de comptage.

Sur la figure 9A, on peut voir un graphique de corrélation avec la méthode de Passing Bablock, entre un comptage C1 en imagerie sans lentille réalisé à partir d'une solution obtenue avec un dispositif de préparation selon l'invention (axe des ordonnées), et un comptage C2 réalisé au moyen d'un automate d'hématologie ABX Pentra 120DX de l'état de la technique (axe des abscisses), sur 37 échantillons de sang humain. En abscisse et en ordonnée, il s'agit du nombre de globules rouges par 10⁶/µl.

Sur la figure 9B, il s'agit d'un graphique représentant les mesures de comptage sous la forme des différences de Bland-Altman avec les mesures de la figure 9A. La différence Δ est représentée sur l'axe des ordonnées et les mesures obtenues au moyen de l'automate d'hématologie ABX Pentra DX120 de l'état de la technique sont sur l'axe des abscisses. On constate que les deux méthodes sont statistiquement équivalentes.

Un exemple de procédé de fabrication d'un dispositif de préparation de la présente demande va maintenant être décrit.

Sur la figure 10, on peut voir une vue éclatée d'un exemple de dispositif de préparation obtenu par superposition d'éléments ayant par exemples les dimensions d'une carte de crédit.

Le dispositif comporte :
- une première plaque P1, dit plaque fluidique, comprenant une face structurée dans laquelle sont réalisés les canaux, et dans laquelle les liquides circulent,
- une deuxième plaque P2 en matériau hyperélastique ou membrane recouvrant ladite face munie des canaux,
- une troisième plaque P3, dite plaque pneumatique, dans laquelle sont réalisées les cavités pour les vannes et les cavités des chambres de préparation, dans lesquelles la membrane va venir se plaquer lorsqu'une dépression est appliquée afin de laisser passer un liquide dans le cas d'une vanne ou de remplir une chambre de préparation. Les canaux d'adressage pneumatique, reliant les cavités à une source de pression, sont également réalisés dans la plaque P3,
- une quatrième plaque P4 fermant les cavités des chambres.

Il est à noter que les cavités des vannes ne traversent généralement pas la plaque P3.

Les plaques P1, P3 et P4 sont de préférence en matériaux polymère, par exemple en polyméthacrylate de méthyle (PPMA), en plexiglass, et très avantageusement en copolymère cyclo-oléfine (COC). Le COC présente l'avantage d'avoir une bonne tenue aux solvants et aux produits de rinçage. En variante, elles sont réalisées en verre ou en silicium. Les plaques peuvent être structurées par embossage, moulage, ou par usinage mécanique.

Les plaques P1, P3 et P4 ont par exemple une épaisseur comprises entre quelques dizaines de microns à plusieurs mm typiquement 3 mm.

La plaque P4 a par exemple une épaisseur de 0,5 mm.

La plaque pneumatique P3 a par exemple une épaisseur de 3 mm.

La plaque fluidique P1 a par exemple une épaisseur de 3mm.

La plaque P2 est en un matériau offrant une très grande aptitude à se déformer élastiquement. Par exemple, la plaque est en matériau silicone appelé Ecoflex^{®} fabriqué par la société Smooth On. Ce matériau présente un taux d'élongation de 800%. Par exemple la plaque P2 est réalisée par étalement à la tournette par centrifugation.

Parmi les matériaux utilisables pour fabriquer la plaque P2, on aura notamment les élastomères de la famille des silicones tels que les MQ (MéthylPolysiloxanes), les VMQ (Vinyl-MéthylPolysiloxanes, les PVMQ (Phényl-Vinyl-MéthylPolysiloxanes) ou les élastomères de type thermoplastiques (TPE), par exemple les TPE-S, TPS, TPE-E, TPC.

La plaque P2 présente une épaisseur par exemple comprise entre 50 µm et 200 µm. La plaque P2 assure l'isolation entre les liquides et les gaz, le matériau de la plaque est donc adaptée pour supporter les liquides utilisés et peu perméable au gaz.

Dans l'exemple représenté, afin de solidariser les plaques P1, P2 et P3, des couches d'adhésifs double face 48 sont prévues entre la première plaque P1 et la deuxième plaque P2, et entre la deuxième plaque P2 et la troisième plaque P3. Les couches d'adhésif sont découpées au niveau des zones ou le film doit être actionné, c'est-à-dire au niveau des vannes et des chambres de préparation. Les découpes sont réalisées par exemple par une machine de découpe, par laser ou jet d'eau. Cette étape de découpe a lieu avant la mise en place sur l'une des plaques.

Ensuite, l'une couche d'adhésif 48 est alignée et laminée sur la face de la plaque pneumatique P3, destinée à être en regard de la deuxième plaque P2. L'autre couche d'adhésif 48 est alignée et laminée sur la face structurée de la plaque fluidique P1. La deuxième plaque P2 est ensuite laminée sur l'une des deux plaques P1 et P3 puis plaquée sur l'autre carte.

Dans un autre exemple de réalisation, les deux plaques P1 et P2 et la membrane 46 sont assemblées par des moyens mécaniques, par exemple par clampage mécanique.

En variante, le collage par des couches de matériau adhésif double face peut être remplacé par un collage par plasma 0₂ ou par un collage au moyen d'une colle mise en forme par exemple par sérigraphie.

En variante encore, les différents modes de solidarisation par collage et/ou les modes de solidarisation par des moyens mécaniques peuvent être combinés.

Le dispositif de préparation selon l'invention est particulièrement adapté à une application médicale, par exemple pour des analyses de sang et de fluides biologiques. Il peut également être appliqué dans d'autres domaines par exemple dans le domaine de l'analyse de polluants dans des effluents et/ou de cours d'eau.

Au vue de la réalisation du dispositif de préparation sous forme de carte de faible dimension, de préférence en polymère, il peut être envisagé de réaliser des dispositifs à usage unique, ce qui peut être particulièrement intéressant dans le domaine médical pour éviter des contaminations entre deux analyses.

## Revendications

1. Dispositif de préparation d'au moins une solution de volume calibré (Vc) à partir d'au moins un premier échantillon et d'au moins un premier réactif, comportant un réseau microfluidique comprenant au moins une première entrée d'alimentation (E1) en un premier échantillon, au moins une deuxième entrée d'alimentation (E2) en un premier réactif, au moins une sortie d'évacuation (S1), au moins une sortie de collecte (S2) de la solution à analyser, une première zone d'échantillonnage (ZE) de volume calibré (Ve) à laquelle sont connectées directement les première (E1) et deuxième (E2) entrées, au moins des première (4) et deuxième (6) chambres de préparation connectées à la première zone d'échantillonnage, et disposées de part et d'autre de la zone d'échantillonnage de sorte que le fluide destiné à circuler d'une chambre de préparation à l'autre circule dans la première zone d'échantillonnage (ZE), la première chambre de préparation (4) étant à volume variable entre un volume minimal (V0) et le volume calibré (Vc), la deuxième chambre de préparation (6) étant à volume variable, ledit dispositif comportant également des moyens pour permettre ou interrompre la circulation du fluide au moins au niveau des première et deuxième entrées et au niveau des sorties de collecte (S2) et d'évacuation (S1).

2. Dispositif de préparation selon la revendication 1, dans lequel la première (2) et la deuxième (4) chambre de préparation comportent une paroi en matériau hyperélastique.

3. Dispositif de préparation selon la revendication 1 ou 2, dans lequel la deuxième entrée d'alimentation (E2) en premier réactif est connectée à la zone d'échantillonnage (ZE), de sorte que lors de l'injection du premier réactif dans la première chambre de préparation (4), le premier réactif traverse la zone d'échantillonnage (ZE).

4. Dispositif de préparation, selon l'une des revendications 1 à 3, comportant des moyens pour permettre ou interrompre la circulation du fluide situés à l'entrée de la première chambre de préparation (4).

5. Dispositif de préparation selon l'une des revendications 1 à 4, comportant au moins une entrée d'alimentation supplémentaire en un deuxième réactif, une deuxième zone d'échantillonnage et des troisième et quatrième chambres de préparation connectées à la zone d'échantillonnage et disposées de part et d'autre de la deuxième zone d'échantillonnage, de sorte que le fluide destiné à circuler d'une chambre de préparation à l'autre circule dans la deuxième zone d'échantillonnage, au moins la troisième chambre de préparation étant à volume variable entre un volume minimal (V0') et au moins un volume calibré (Vc'), la deuxième zone d'échantillonnage étant connectée à la première entrée d'alimentation pour un premier échantillon de sorte que, lors du remplissage de la première zone d'échantillonnage, le deuxième zone d'échantillonnage soit remplie, et des moyens pour permettre ou interrompre la circulation du fluide situés à l'entrée de la troisième chambre de préparation.

6. Dispositif de préparation selon l'une des revendications 1 à 5, comportant au moins une entrée d'alimentation pour un fluide de rinçage du circuit et/ou des moyens pour générer des bulles de gaz de volume calibré en amont de la sortie de collecte (E2)

7. Dispositif de préparation selon l'une des revendications précédentes, dans lequel la sortie de collecte est connectée directement à la zone d'échantillonnage de sorte à permettre la circulation d'un liquide dans un canal entre la zone d'échantillonnage et la sortie de collecte.

8. Ensemble comportant au moins un dispositif de préparation selon l'une des revendications précédentes et un support comprenant au moins le réservoir d'échantillon, au moins le réservoir de réactif, des moyens de commande configurés pour activer des moyens d'actionnement des moyens pour permettre ou interrompre la circulation des fluides, des moyens pour modifier le volume de la première chambre de préparation et le volume de la deuxième chambre de préparation, et des moyens d'analyse connectés à la sortie de collecte.

9. Ensemble selon la revendication 8, dans lequel les moyens de commande sont configurés pour transférer la solution entre la première chambre de préparation et la deuxième chambre de préparation à travers la zone d'échantillonnage.

10. Ensemble selon la revendication 8 ou 9, dans lequel les moyens de commande sont configurés pour injecter dans la première chambre de préparation une première quantité de réactif, préalablement à l'injection d'un volume d'échantillon (Ve) mesuré par la zone d'échantillonnage.

11. Ensemble selon l'une des revendications 8 à 10, dans lequel les moyens d'analyse permettent de quantifier et/ou de qualifier des éléments contenus dans la solution.

12. Procédé de préparation d'une solution mettant en oeuvre un dispositif de préparation selon l'une des revendications 1 à 7, comportant :
a) une phase d'échantillonnage lors de laquelle la zone d'échantillonnage est remplie de l'échantillon,
b) une phase d'injection du volume d'échantillon (Ve) contenu dans la zone d'échantillonnage dans la première chambre de préparation,
c) une phase d'injection d'un volume de réactif dans la chambre de préparation jusqu'à ce que le volume de la première chambre de préparation atteigne le volume calibré (Vc),
d) une phase de transfert de la solution entre la première chambre de préparation et la deuxième chambre de préparation de sorte à la mélanger et à collecter les traces d'échantillon dans la zone d'échantillonnage.

13. Procédé de préparation selon la revendication 12, dans lequel la phase d'injection c) a lieu à travers la première zone d'échantillonnage.

14. Procédé de préparation selon la revendication 12 ou 13, comportant une étape d'injection d'une quantité de réactif dans la première chambre avant l'injection du volume calibré d'échantillon.

15. Procédé d'analyse d'une solution mettant en oeuvre l'ensemble selon l'une des revendications 12 à 14, comportant la préparation de la solution et le transfert de la solution de l'une des chambres de préparation vers les moyens d'analyse à travers la sortie de collecte (S2).

## Patentansprüche

1. Vorrichtung zur Herstellung von mindestens einer Lösung mit kalibriertem Volumen (Vc), ausgehend von mindestens einer ersten Probe und mindestens einem ersten Reagens, ein Mikrofluidik-Netzwerk beinhaltend, das mindestens einen ersten Versorgungseinlass (E1) zu einer ersten Probe umfasst, mindestens einen zweiten Versorgungseinlass (E2) zu einem ersten Reagens, mindestens einen Evakuierungsauslass (S1), mindestens einen Sammelauslass (S2) der zu analysierenden Lösung, eine erste Zone der Probennahme (ZE) des kalibrierten Volumens (Ve), mit der der erste (E1) und der zweite (E2) Einlass direkt verbunden sind, und mindestens erste (4) und zweite (6) Herstellungskammern, die mit der ersten Probennahmezone verbunden sind und auf beiden Seiten der Probennahmezone so angeordnet sind, dass das Fluid, das zur Zirkulation von einer Herstellungskammer zur anderen bestimmt ist, in der ersten Probennahmezone (ZE) zirkuliert, wobei die erste Herstellungskammer (4) ein Volumen aufweist, das variabel ist zwischen einem minimalen Volumen (V0) und dem kalibrierten Volumen (Vc), wobei die zweite Herstellungskammer (6) ein variables Volumen aufweist, wobei die Vorrichtung auch Mittel beinhaltet, um die Zirkulation des Fluids mindestens im Bereich der ersten und zweiten Einlässe zu ermöglichen oder zu unterbrechen und im Bereich der Sammel- (S2) und Evakuierungsauslässe (S1).

2. Herstellungsvorrichtung nach Anspruch 1, wobei die erste (2) und die zweite (4) Herstellungskammer eine Wand aus hyperelastischem Material beinhalten.

3. Herstellungsvorrichtung nach Anspruch 1 oder 2, wobei der zweite Versorgungseinlass (E2) für das erste Reagens mit der Probennahmezone (ZE) so verbunden ist, dass beim Einspritzen des ersten Reagens in die erste Herstellungskammer (4) das erste Reagens die Probennahmezone (ZE) durchläuft.

4. Herstellungsvorrichtung nach einem der Ansprüche 1 bis 3, Mittel beinhaltend, um die Zirkulation des Fluids zu ermöglichen oder zu unterbrechen, die sich am Einlass der ersten Herstellungskammer (4) befinden.

5. Herstellungsvorrichtung nach einem der Ansprüche 1 bis 4, mindestens einen zusätzlichen Versorgungseinlass für ein zweites Reagens beinhaltend, eine zweite Probennahmezone und dritte und vierte Herstellungskammern, die mit der Probennahmezone verbunden sind und auf beiden Seiten der zweiten Probennahmezone so angeordnet sind, dass das Fluid, das zur Zirkulation von einer Herstellungskammer zur anderen bestimmt ist, in der zweiten Probennahmezone zirkuliert, wobei mindestens die dritte Herstellungskammer ein Volumen aufweist, das variabel ist zwischen einem minimalen Volumen (V0') und mindestens einem kalibrierten Volumen (Vc'), wobei die zweite Probennahmezone mit dem ersten Versorgungseinlass für eine erste Probe so verbunden ist, dass, während dem Befüllen der ersten Probennahmezone, die zweite Probennahmezone gefüllt ist, und Mittel, um die Zirkulation des Fluids am Einlass der dritten Herstellungskammer zu ermöglichen oder zu unterbrechen.

6. Herstellungsvorrichtung nach einem der Ansprüche 1 bis 5, mindestens einen Versorgungseinlass für ein Fluid zur Spülung des Kreislaufs beinhaltend und/oder Mittel zur Erzeugung von Gasblasen mit kalibriertem Volumen stromaufwärts des Sammelauslasses (E2).

7. Herstellungsvorrichtung nach einem der vorhergehenden Ansprüche, wobei der Sammelauslass mit der Probennahmezone so direkt verbunden ist, dass die Zirkulation einer Flüssigkeit in einem Kanal zwischen der Probennahmezone und dem Sammelauslass ermöglicht wird.

8. Anordnung, mindestens eine Herstellungsvorrichtung nach einem der vorhergehenden Ansprüche beinhaltend und einen Träger, der mindestens den Probenbehälter umfasst, mindestens den Reagensbehälter, Steuermittel, die konfiguriert sind, um die Betätigungsmittel zu aktivieren, Mittel, um die Zirkulation der Fluide zu ermöglichen oder zu unterbrechen, Mittel, um das Volumen der ersten Herstellungskammer und das Volumens der zweiten Herstellungskammer zu verändern, und Analysemittel, die mit dem Sammelauslass verbunden sind.

9. Anordnung nach Anspruch 8, wobei die Steuermittel konfiguriert sind, um die Lösung zwischen der ersten Herstellungskammer und der zweiten Herstellungskammer durch die Probennahmezone hindurch zu transferieren.

10. Anordnung nach Anspruch 8 oder 9, wobei die Steuermittel konfiguriert sind, um in die erste Herstellungskammer eine erste Reagensmenge einzuspritzen, bevor ein Probenvolumen (Ve) eingespritzt wird, das durch die Probennahmezone gemessen wird.

11. Anordnung nach einem der Ansprüche 8 bis 10, wobei die Analysemittel die Quantifizierung und/oder Qualifizierung der Elemente ermöglichen, die in der Lösung enthalten sind.

12. Verfahren zur Herstellung einer Lösung, das eine Herstellungsvorrichtung nach einem der Ansprüche 1 bis 7 implementiert, beinhaltend:
a) eine Probennahmephase, in der die Probennahmezone mit der Probe gefüllt wird,
b) eine Phase der Einspritzung des Probenvolumens (Ve), das in der Probennahmezone in der ersten Herstellungskammer enthalten ist,
c) eine Phase der Einspritzung eines Reagensvolumens in die Herstellungskammer, bis das Volumen der ersten Herstellungskammer das kalibrierte Volumen (Vc) erreicht,
d) eine Phase des Transfers der Lösung zwischen der ersten Herstellungskammer und der zweiten Herstellungskammer, so dass sie gemischt wird und um Probespuren in der Probennahmezone zu sammeln.

13. Herstellungsverfahren nach Anspruch 12, wobei die Einspritzungsphase c) in der ersten Probennahmezone erfolgt.

14. Herstellungsverfahren nach Anspruch 12 oder 13, einen Schritt des Einspritzens einer Reagensmenge in die erste Kammer beinhaltend, vor dem Einspritzen des kalibrierten Probenvolumens.

15. Verfahren zur Analyse einer Lösung, das die Anordnung nach einem der Ansprüche 12 bis 14 implementiert, die Herstellung der Lösung und den Transfer der Lösung von einer der Herstellungskammern zu den Analysemitteln durch den Sammelauslass (S2) hindurch beinhaltend.

## Claims

1. A device for preparing at least one solution of calibrated volume from at least one first sample and at least one first reagent, including a microfluidic network comprising at least one first inlet (E1) for supplying a first sample, at least one second inlet (E2) for supplying a first reagent, at least one discharge outlet (S1), at least one outlet (S2) for collecting the solution to be analysed, a first sampling zone (ZE) of calibrated volume (Ve) to which the first (E1) and second (E2) inlets are directly connected, at least first (4) and second (6) preparation chambers which are connected to the first sampling zone, and disposed on either side of the sampling zone such that the fluid intended to circulate from one preparation chamber to the other circulates in the first sampling zone (ZE), the first preparation chamber (4) being of variable volume between a minimum volume (V0) and the calibrated volume (Vc), the second preparation chamber (6) being of variable volume, said device also including means for allowing or interrupting the circulation of the fluid at least at the first and second inlets and at the collection (S2) and discharge (S1) outlets.

2. The preparation device according to claim 1, wherein the first (2) and the second (4) preparation chambers include a wall made of hyperelastic material.

3. The preparation device according to claim 1 or 2, wherein the second inlet (E2) for supplying a first reagent is connected to the sampling zone (ZE), such that during the injection of the first reagent into the first preparation chamber (4), the first reagent passes through the sampling zone (ZE).

4. The preparation device according to one of claims 1 to 3, including means for allowing or interrupting the circulation of the fluid located at the inlet of the first preparation chamber (4).

5. The preparation device according to one of claims 1 to 4, including at least one additional inlet for supplying a second reagent, a second sampling zone and third and fourth preparation chambers which are connected to the sampling zone and disposed on either side of the second sampling zone, such that the fluid intended to circulate from one preparation chamber to the other circulates in the second sampling zone, at least the third preparation chamber being of variable volume between a minimum volume (V0') and at least one calibrated volume (Vc'), the second sampling zone being connected to the first supply inlet for a first sample such that, when filling the first sampling zone, the second sampling zone is filled, and means for allowing or interrupting the circulation of the fluid located at the inlet of the third preparation chamber.

6. The preparation device according to one of claims 1 to 5, including at least one inlet for a circuit rinsing fluid and/or means for generating gas bubbles of calibrated volume upstream of the collection outlet (E2).

7. The preparation device according to one of the preceding claims, wherein the collection outlet is connected directly to the sampling zone so as to allow the circulation of a liquid in a channel between the sampling zone and the collection outlet.

8. An assembly including at least one preparation device according to one of the preceding claims and a support comprising at least the sample reservoir, at least the reactive reservoir, control means configured to activate means for actuating means for allowing or interrupting the circulation of the fluids, means for changing the volume of the first preparation chamber and the volume of the second preparation chamber, and analysis means connected to the collection outlet.

9. The assembly according to claim 8, wherein the control means are configured to transfer the solution between the first preparation chamber and the second preparation chamber through the sampling zone.

10. The assembly according to claim 8 or 9, wherein the control means are configured to inject a first amount of reagent into the first preparation chamber, prior to the injection of a sample volume (Ve) measured by the sampling area.

11. The assembly according to one of claims 8 to 10, wherein the analysis means allow quantifying and/or qualifying elements contained in the solution.

12. A method for preparing a solution implementing a preparation device according to one of claims 1 to 7, including:
a) a sampling phase during which the sampling zone is filled with the sample,
b) a phase of injecting the sample volume (Ve) contained in the sampling zone into the first preparation chamber,
c) a phase of injecting a reagent volume into the preparation chamber until the volume of the first preparation chamber reaches the calibrated volume (Vc),
d) a phase of transferring the solution between the first preparation chamber and the second preparation chamber so as to mix it and collect the traces of sample in the sampling zone.

13. The preparation method according to claim 12, wherein the injection phase c) takes place through the first sampling zone.

14. The preparation method according to claim 12 or 13, including a step of injecting an amount of reagent into the first chamber before injecting the calibrated volume of sample.

15. A method for analysing a solution implementing the assembly according to one of claims 12 to 14, including the preparation of the solution and the transfer of the solution from one of the preparation chambers to the analysis means through the collection output (S2).
